# EUROPÄISCHE PATENTSCHRIFT

(11) **EP 0 621 346 B1**
(45) Veröffentlichungstag und Bekanntmachung des Hinweises auf die Patenterteilung: **27.03.1996**
(21) Anmeldenummer: 94105832.3
(22) Anmeldetag: 15.04.1994
(51) Int. Cl.: C22C 9/04, C22C 9/01, G02C 5/00

(54) **Verwendung einer Kupfer-Zink-Legierung zur Herstellung von nickelfreien Gebrauchsgegenständen**
Use of a copper-zinc alloy for making nickel-free consumer articles
Utilisation d'un alliage cuivre-zinc pour la fabrication d'objets utilitaires sans nickel

(30) Priorität: 23.04.1993 DE 4313308
(43) Veröffentlichungstag der Anmeldung: 26.10.1994
(73) Patentinhaber: WIELAND-WERKE AG, D-89070 Ulm (DE)
(72) Erfinder: Kuhn, Hans-Achim, Dr.-Ing., D-89257 Illertissen (DE); Bilmayer, Roman, Dipl.-Ing., D-89250 Senden (DE)

(56) Entgegenhaltungen:
- EP-A- 0 532 929
- GB-A- 2 049 727

## Beschreibung

Die Erfindung betrifft die Verwendung einer Kupfer-Zink-Legierung zur Herstellung von nickelfreien Gebrauchsgegenständen, insbes. Brillenteilen, Schmuckgegenständen, Eßbestecken, Kurzwaren etc, die keine allergischen Reaktionen auslösen.

Unter Brillenteilen sollen dabei insbes. Brillenbügel, Brillengestelle, Augenrandprofile und Brillenscharniere verstanden werden.

Von einer guten Brillenlegierung werden u.a. ausreichende mechanische Festigkeit (Zugfestigkeit > 600 MPa, Härte 160 bis 300 HV), ein niedriger Elastizitätsmodul, ausreichende Entfestigungsbeständigkeit, ein ansprechendes optisches Aussehen, gute Polierbarkeit und Beschichtbarkeit sowie in der Scharnierfertigung gute Zerspanbarkeit erwartet. Für diesen Zweck wurden bisher insbes. Pb-haltige und Pb-freie Neusilberlegierungen (z.B. CuNi18Zn20) eingesetzt. Gebrauchsgegenstände wie z.B. Brillen aus diesen nickelhaltigen Legierungen können bei Kontakten mit der Haut Allergien auslösen. Zur Zeit sind daher Bestrebungen im Gange, herkömmliche nickelhaltige Legierungen, die zur Herstellung von Teilen von Brillengestellen genutzt werden - z.B. Brillenbügel, Augenrandprofile, Nasenbügel und Scharniere - durch geeignete nickelfreie Legierungen mit ähnlich guten oder besseren Eigenschaften zu ersetzen. Brillenelemente werden durch Hartlöten zwischen 620 und 680 °C verbunden. Die dabei auftretenden kurzzeitigen Glühungen dürfen die mechanischen und elastischen Eigenschaften der zu verbindenden Brillenteile nicht wesentlich beeinflussen. Resthärten HV von ca. 150 und mehr werden verlangt. Die Suche nach einem vollwertigen Ersatz der Neusilber- oder Monel-Legierungen (z.B. NiCu28Fe2) ist insofern auch zwingend, als Beschichtungen von nickelhaltigen Legierungen einen zusätzlichen Fertigungsaufwand darstellen.

Der Erfindung liegt daher die Aufgabe zugrunde, für den obengenannten Verwendungszweck eine Kupfer-Legierung vorzuschlagen, die bei kostengünstiger Herstellbarkeit und ausreichenden mechanischen Kenngrößen kein Nickel aufweist.

Die Aufgabe wird erfindungsgemäß durch die Verwendung einer Kupfer-Zink-Legierung gelöst, die aus
67 bis 72 % Kupfer,
6,0 bis 8,5 % Mangan,
4,0 bis 8,0 % Aluminium,
1,0 bis 2,5 % Silizium,
1,0 bis 1,5 % Eisen,
0,5 bis 1,5 % Blei,
Rest Zink und üblichen Verunreinigungen besteht
(die %-Angaben beziehen sich dabei auf das Gewicht).

Aus der DE-PS 764.372 ist zwar eine Legierung aus 50 bis 70 % Kupfer, 3 bis 10 % Mangan, 2 bis 8 % Aluminium, 0,05 bis 1,5 % Silizium, bis zu 10 % Blei und einem Zusatz von 0,1 bis 5 % Eisen, Rest Zink bekannt, diese Legierung wird jedoch vorzugsweise für die Herstellung von auf Gleitung beanspruchten Maschinenteilen, wie Lager, Schneckenräder, Zahnräder, Gleitschuhe und dgl. eingesetzt.

Aus der DE-PS 2.919.478 ist die Verwendung einer Legierung ähnlicher Zusammensetzung für Halbzeug und Halbfabrikate, insbes. Synchronringe bekannt. Die Verwendung beruht im wesentlichen auf der speziellen Wärmebehandlung mit Warmverformung und Abschrecken an Luft zur Einstellung eines Gefüges mit 60 bis 85 % α-Mischkristall, das überwiegend feindispers verteilt in der β-Phase eingelagert ist. Mit diesem Gefügezustand ist die Legierung geeignet für Formgebungsverfahren wie Strangpressen und Gesenkschmieden.

Bei der für die erfindungsgemäße Verwendung geeigneten Legierung handelt es sich um ein warmpreßbares α -β-Messing. Bei einem Zinkäquivalent von 6,0 verschiebt der Aluminium-Anteil die Phasengrenze zu hohen Kupfergehalten. Aluminium erhöht mischkristallhärtend die Festigkeit. Sofern Mangan nicht durch Silizide abgebunden wird, verbessert Mangan ebenfalls die Festigkeit, allerdings in einem geringeren Umfang als Aluminium. Mangan und Silizium scheiden intermetallisch als nadelförmige, hexagonale Silizide des Typs Mn₅Si₃ aus, so daß der Werkstoff gute Verschleiß- und Gleiteigenschaften aufzuweisen hat. Eisen feint das Korn. Die Ausscheidung von Kupfer und zinkreichen α -Fe-Mischkristallen läuft im α -Messing-Mischkristall deutlich träger ab als im β-Mischkristall. Bleiteilchen verbessern die Zerspanbarkeit. Der Anteil der β-Phase kann im Preßgut bis zu 80 % einnehmen. Im Preßzustand findet man in der β-Phase nadelig eingelagerte α -Mischkristalle. Mit Glühungen um 750 °C kann der α -Anteil unter 5 % gedrückt werden. Der Anteil der Mangansilizide beträgt durchgehend 15 %.

Als bevorzugte Ausführungsformen der Erfindung wird die Verwendung einer Kupferlegierung entsprechend den Zusammensetzungen nach den Ansprüchen 2 bis 5 empfohlen.

Für die Fertigung von drahtförmigem Halbzeug und Profilen über Strangpressen und Kaltumformen genügt eine gewöhnliche langsame Abkühlung des stranggepreßten Gutes an Luft. Das Gefüge mit 40 % bis 60 % β-Anteil eignet sich für die endmaßnahe Warmumformung von Profilen durch Stangpressen. Zwischenglühungen zwischen 600 °C und 700 °C genügen dann, um das Restgefüge für eine abschließende Kaltumformung vorzubereiten. Werden nur geringe Kaltumformgrade von einigen Prozent wie z.B. für Brillenscharnierprofile benötigt, kann auch ohne Zwischenglühung aus dem Preßzustand auf Endmaß gezogen werden.

Die Legierung besitzt gegenüber Pb-haltigen Neusilberlegierungen erfindungsgemäß folgende entscheidende Vorteile:
1. Die Legierung ist vollkommen nickelfrei. Nickelallergien können somit durch Gebrauchsgegenstände, die aus dieser Legierung gefertigt werden, nicht ausgelöst werden.
2. Das ausgezeichnete Warmumformvermögen aufgrund des β-Phasenanteils ermöglicht eine endmaßnahe Pressung von Drähten und von Brillenscharnierprofilen mit komplizierten Konturen. Gegenüber Neusilber werden somit zahlreiche Kaltumformarbeitsgänge und Zwischenglühungen eingespart.
3. Das Entfestigungsverhalten nach Kurz- und Langzeitglühungen übertrifft die Eigenschaften von Neusilber wie z.B. CuNil8Zn20.

Die Erfindung soll durch folgendes Beispiel näher ausgeführt werden:

Eine Legierung der Zusammensetzung Cu 69,83; Mn 7,15; Al 4,76; Si 1,45; Fe 1,20; Pb 0,87; Zn Rest wurde bei 1140 °C im kontinuierlichen Stranggießverfahren zu Gußstangen abgegossen.

Überdrehte 6"-Bolzen wurden mit einer Strangpresse direkt im 2-Loch-Verfahren bei 730 °C zu einem Scharnierprofil mit den stärksten Konturabmaßen 6,5 und 7,7 mm und Stegstärken von 1,4 mm endmaßnah verpreßt. Nach einer Endformgebung mit einem geringen Kaltumformgrad wurden folgende mechanischen Eigenschaften erreicht:
- Elastizitätsmodul (E-Modul) =: 103 GPa
- Zugfestigkeit Rₘ =: 682 MPa
- Streckgrenze R_{p0,2} =: 610 MPa
- Härte HV10 =: 216
- Bruchdehnung A₁₀ =: 4,3 %

Nach Kurzzeitglühungen von 30 Sekunden Dauer bei 650 °C werden Resthärten HV10 von 170 bis 180 an diesem Profil registriert. Damit sind die Forderungen der Brillengestellfertiger nach genügend hohen Resthärten nach Verbindungsarbeiten mit Hartlot leicht zu erfüllen.

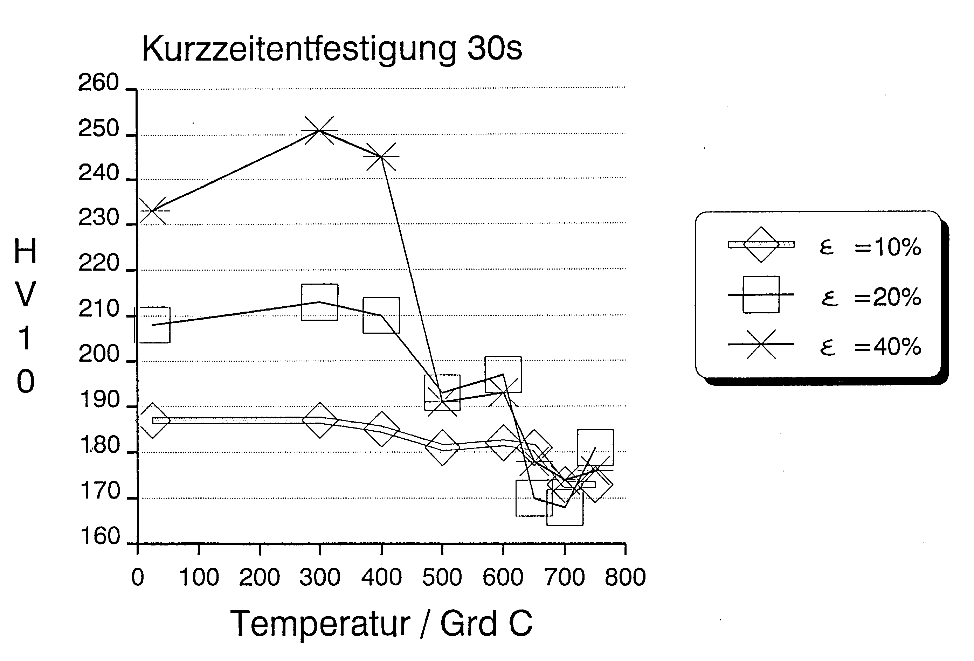

Die Abbildung zeigt die Härteabnahme von verschieden stark kaltumgeformten ( ε = 10 %, 20 % und 40 %) Drahtmustern nach Kurzzeitglühungen von 30 Sekunden Dauer.

## Patentansprüche

1. Verwendung einer Kupfer-Zink-Legierung, bestehend aus
67 bis 72 % Kupfer,
6,0 bis 8,5 % Mangan,
4,0 bis 8,0 % Aluminium,
1,0 bis 2,5 % Silizium,
1,0 bis 1,5 % Eisen,
0,5 bis 1,5 % Blei,
Rest Zink und üblichen Verunreinigungen,
zur Herstellung von nickelfreien Gebrauchsgegenständen, die keine allergischen Reaktionen auslösen.

2. Verwendung einer Kupferlegierung nach Anspruch 1 mit 68 bis 70 % Kupfer für den Zweck nach Anspruch 1.

3. Verwendung einer Kupferlegierung nach Anspruch 1 oder 2 mit 7,0 bis 8,0 % Mangan für den Zweck nach Anspruch 1.

4. Verwendung einer Kupferlegierung nach einem oder mehreren der Ansprüche 1 bis 3 mit 6,0 bis 8,0 % Aluminium für den Zweck nach Anspruch 1.

5. Verwendung einer Kupferlegierung nach einem oder mehreren der Ansprüche 1 bis 4 mit 1,0 bis 1,5 % Silizium für den Zweck nach Anspruch 1.

6. Verwendung einer Kupferlegierung nach einem oder mehreren der Ansprüche 1 bis 5 zur Herstellung von Brillenteilen, Schmuckgegenständen, Eßbestelken und Kurzwaren.

## Claims

1. Use of a copper-zinc alloy which consists of
67 to 72 % copper,
6.0 to 8.5 % manganese,
4.0 to 8.0 % aluminium,
1.0 to 2.5 % silicon,
1.0 to 1.5 % iron,
0.5 to 1.5 % lead,
the rest zinc and usual impurities
for producing nickel-free consumer articles which do not trigger any allergic reactions.

2. Use of a copper alloy as claimed in Claim 1 with 68 to 70 % copper for the purpose as claimed in Claim 1.

3. Use of a copper alloy as claimed in Claim 1 or 2 with 7.0 to 8.0 % manganese for the purpose as claimed in Claim 1.

4. Use of a copper alloy as claimed in one or more of Claims 1 to 3 with 6.0 to 8.0 % aluminium for the purpose as claimed in Claim 1.

5. Use of a copper alloy as claimed in one or more of Claims 1 to 4 with 1.0 to 1.5 % silicon for the purpose as claimed in Claim 1.

6. Use of a copper alloy as claimed in one or more of Claims 1 to 5 for producing spectacle parts, pieces of jewellery, cutlery and haberdashery.

## Revendications

1. Utilisation d'un alliage cuivre-zinc constitué de
67 à 72 % de cuivre,
6,0 à 8,5 % de manganèse,
4,0 à 8,0 % d'aluminium,
1,0 à 2,5 % de silicium,
1,0 à 1,5 % de fer,
0,5 à 1,5 % de plomb,
le reste étant constitué de zinc et des impuretés habituelles,
pour produire des objets d'usage général sans nickel qui ne déclenchent pas de réactions allergiques.

2. Utilisation d'un alliage de cuivre selon la revendication avec 68 à 70 % de cuivre pour remplir l'objectif de la revendication 1.

3. Utilisation d'un alliage de cuivre selon la revendication 1 ou 2 avec 7,0 à 8,0 % de manganèse pour remplir l'objectif selon la revendication 1.

4. Utilisation d'un alliage de cuivre selon l'une ou plusieurs des revendications 1 à 3 avec 6,0 à 8,0 % d'aluminium pour remplir l'objectif selon la revendication 1.

5. Utilisation d'un alliage de cuivre selon l'une ou plusieurs des revendications 1 à 4 avec 1,0 à 1,5 % de silicium pour remplir l'objectif de la revendication 1.

6. Utilisation d'un alliage de cuivre selon l'une ou plusieurs des revendications 1 à 5 pour produire des pièces de lunettes, des objets décoratifs, des couverts et des pièces de mercerie.
